**Europäisches Patentamt**

(19) **European Patent Office**

**Office européen des brevets**

(11) Veröffentlichungsnummer: **0 027 981**
**B1**

(12) # EUROPÄISCHE PATENTSCHRIFT

(45) Veröffentlichungstag der Patentschrift:
04.05.83

(51) Int. Cl.³: **A 01 K 31/16**

(21) Anmeldenummer: **80106361.1**

(22) Anmeldetag: **18.10.80**

(54) **Nestanlage für Geflügelfarmen.**

(30) Priorität: **20.10.79 DE 2942522**

(43) Veröffentlichungstag der Anmeldung:
**06.05.81 Patentblatt 81/18**

(45) Bekanntmachung des Hinweises auf die Patenterteilung:
**04.05.83 Patentblatt 83/18**

(84) Benannte Vertragsstaaten:
**AT BE CH FR GB LI NL SE**

(56) Entgegenhaltungen:
**DE-A-1 966 385**
**DE-B-1 159 208**

(73) Patentinhaber: **Kühlmann, Josef, Königstrasse 41,
D-4401 Laer (DE)**

(72) Erfinder: **Kühlmann, Josef, Königstrasse 41, D-4401 Laer
(DE)**

(74) Vertreter: **Habbel, Hans-Georg, Dipl.-Ing.,
Postfach 3429 Am Kanonengraben 11, D-4400 Münster
(DE)**

BUNDESDRUCKEREI BERLIN

## Nestanlage für Geflügelfarmen

Die Erfindung bezieht sich auf eine Nestanlage für Geflügelfarmen, bei der Käfigreihen in mehreren Etagen übereinander angeordnet sind, mit Fallschächten für Eier, Umlenkwänden in den Fallschächten für eine zur Verzögerung des freien Falls dienende Spreuschicht, die von oben nach unten von einem als Zuführvorrichtung dienenden Vorratstrog zu einem als Abzugsvorrichtung dienenden Eiersammeltrog geführt wird.

Mehretagige Batterie-Käfiganlagen (DE-A-1 962 423) bestehen heute üblicherweise aus engen Käfigen, in denen die Tiere auf einem gitterartigen Boden aufstehen, durch den der Kot hindurchfallen kann, auf dem aber die Eier abrollen und üblicherweise zu einer an der Frontseite der Käfiganordnung angeordneten Eierfördervorrichtung geführt werden, während der Kot über entsprechende Kotfördereinrichtungen abgefördert wird. Derartige Käfiganordnungen entsprechen nicht im geringsten den üblichen Umgebungsbedingungen der Tiere, so daß dadurch auch die Legeleistung der Tiere beeinträchtigt wird.

Aus der DE-A-1 966 385 ist es bei derartigen Batterie-Käfiganlagen bekanntgeworden, eine Eiersammelvorrichtung einzusetzen, bei der die Eier in einer kontinuierlichen Spreuschicht von oben nach unten abgeführt werden. Dabei ist die Spreuschicht von einem oberhalb der Käfigetagen gelegenen Vorratstrog ausgehend, der Schwerkraft folgend, über den Etagen zugeordnete Umlenkwände zickzackförmig zu einem am Fuß der Anlage befindlichen Förder- und Sammeltrog geführt.

Bei sogenannten Nestanlagen ist es bekanntgeworden (DE-B-1 159 208), die Nester durch Behälter zu bilden, deren Bodenseite durch ein Fördermittel gebildet wird, auf dem Spreu aufliegt, so daß die Tiere, wenn sie sich in diesen Behältern befinden, auf der Spreu aufsitzen und somit wie bei natürlicher Halterung scharren und sich ihr Nest bilden können, wobei sie in dieser Spreu warm und geschützt sitzen. Außerdem schützt die Spreu die Eier.

Der Erfindung liegt die Aufgabe zugrunde, eine Nestanlage zu schaffen, die die Vorteile der mit Spreu gefüllten Legenester aufweist, aber gleichzeitig eine große Hühnerhaltung gewährleistet, wie sie durch die üblichen mehretagigen Batterie-Käfiganlagen möglich gemacht wird.

Diese Aufgabe wird erfindungsgemäß dadurch gelöst, daß eine Umlenkwand jeweils für den darüberliegenden Käfig einen die Spreuschicht tragenden Boden und für den darunterliegenden Käfig eine Deckenfläche bildet und — in Seitenansicht der Käfiganordnung gesehen — einenendes an der einen Außenwand der Käfiganordnung zur gegenüberliegenden Außenwand weisend, nach unten geneigt befestigt ist und anderenendes innen im Abstand von der anderen gegenüberliegenden Außenwand der Käfiganordnung mit einer sich im wesentlichen parallel zu dieser Außenwand nach unten erstreckenden Abwinkelung endet, um zwischen dieser Abwinkelung der Umlenkwand und der Innenseite dieser Außenwand einen Fallschachtabschnitt für die Spreu und die Eier zu bilden, unterhalb welchem mit Abstand die nächsttieferliegende Umlenkwand an der den Fallschachtabschnitt begrenzenden Außenwand in der gleichen Weise befestigt ist.

Durch diesen Vorschlag wird eine Nestanlage geschaffen, bei der die Bodenbereiche dieser Nester durch Spreu gebildet werden, ohne daß es erforderlich ist, nun für jede einzelne Etage eine Fördereinrichtung einzusetzen, die diese Spreu abfördert. Durch das langsame Nachrutschen der Spreu durch die einzelnen Fallschachtabschnitte erfolgt eine Förderung der Spreu vermischt mit Eiern nach unten, wobei unten die eierreiche Spreuschicht abtransportiert werden kann, ohne daß dabei eine Störung des eigentlichen Nestbetriebes auftritt.

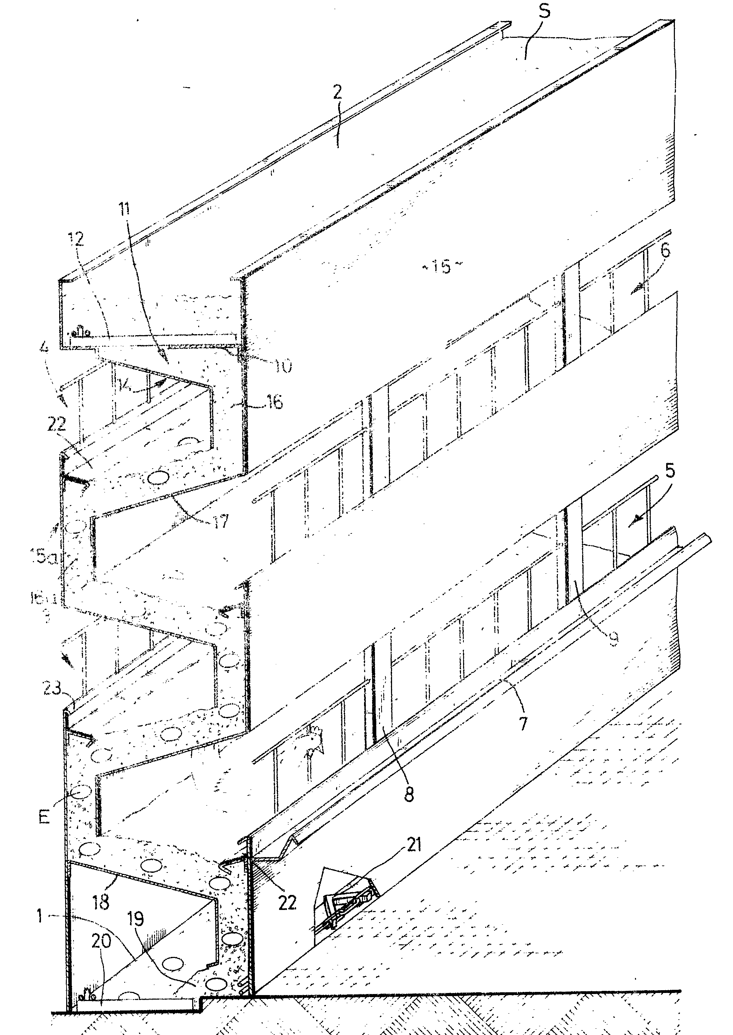

Die Erfindung wird nachfolgend anhand eines in der Zeichnung schematisch dargestellten Ausführungsbeispieles näher erläutert.

In der Darstellung sind die für den normalen Betrieb der Anlage erforderlichen zusätzlichen Hilfsmittel, wie Futtereinrichtungen, Tränkeinrichtungen, Anflugstangen, Heizeinrichtungen usw. nicht dargestellt, da diese üblicher Art sein können. Vielmehr soll die Zeichnung nur den grundsätzlichen Aufbau der erfindungsgemäßen Käfiganordnung für eine Nestanlage verdeutlichen.

In der Zeichnung ist eine vieretagige Nestanlage dargestellt, die nach unten hin durch einen Eiersammeltrog 1 und nach oben hin durch einen Vorratstrog 2 für Spreu S begrenzt wird, wobei es offensichtlich und selbstverständlich ist, daß anstelle der vier Nestetagen auch mehrere oder auch wenigere Nestetagen vorgesehen sein können.

Die einzelnen Nestetagen sind in der Zeichnung mit 3 und 4 bzw. 5 und 6 bezeichnet. Die Nester können dabei nach vorne hin durch in der Zeichnung nur schematisch dargestellte Gitter mit tierkopfgroßen Öffnungen abgeschlossen sein, durch die die Tiere aus den Nestern zu den Futtereinrichtungen, die für die Nestetage 5 schematisch bei 7 angedeutet sind, gelangen können, ohne daß sie aber die Nester verlassen können. Mit 8 und 9 sind die Gesamteinrichtung tragenden Stützstreben bezeichnet.

Der Boden des Vorratstroges 2 wird durch ein Bodenblech 10 gebildet, das eine Durchtrittsöffnung 11 aufweist, über der ein Fördermittel 12, z. B. in vorteilhafter Weise ein Einkettenstegförderer, verfahrbar ist. Unterhalb dieser Durchtrittsöffnung 11 bzw. des Fördermittels 12 ist eine Umlenkwand 14 vorgesehen, die eine Neigung aufweist, die etwas größer als der Böschungswinkel der zu fördernden Spreu S ist.

Die Umlenkwand 14 bildet die Deckenfläche der Nestetage 4 und endet als solche innen im Abstand von einer Außenwand 15 und verläuft dann über einen Teil ihrer Länge parallel mit der Außenwand 15, so daß auf diese Weise ein Fallschachtabschnitt 16 gebildet wird.

Im Abstand unter dem freien Ende der Umlenkwand 14 ist eine weitere Umlenkwand 17 angeordnet, die an der Innenseite der Außenwand 15 anschließt und zur gegenüberliegenden Außenwand 15a verläuft, hier wiederum im Abstand als Bodenfläche endet und über einen kleinen Bereich parallel zu dieser Außenwand 15a verläuft, so daß auf diese Weise ein weiterer Fallschachtabschnitt 16a gebildet wird. In gleicher Weise werden die Nestetagen 3 und 5 durch entsprechende Umlenkwände gebildet.

Die in der Spreu enthaltenen Eier sind mit E bezeichnet und es ist ersichtlich, daß auf diese Weise eine von oben nach unten reichende Spreuschicht gebildet wird, die im Eiersammeltrog 1 endet und fließfähig wird, wenn im Bereich des Eiersammeltroges 1 die Spreuschicht abgezogen wird.

Hierbei ist die letzte Umlenkwand 18 so gestaltet — d. h. endet im Abstand von dem Eiersammeltrog —, daß eine Ausflußöffnung 19 geschaffen wird, an der sich in Abhängigkeit des natürlichen Böschungswinkels der Spreu S die Spreuschicht staut. Auf diese Weise wird erreicht, daß ein selbsttätiges Ausfließen der von oben nach unten reichenden Spreuschicht ausgeschlossen wird. Erst beim Anfahren des im Eiersammeltrog 1 befindlichen Fördermittels 20, z. B. auch eines Einkettenstegförderers, kann nunmehr dieser Böschungswinkel zerstört und dadurch ein Ausfließen der Spreuschicht erreicht werden.

Hierbei ist es selbstverständlich, daß das Abziehen der unteren Spreuschicht so erfolgt, daß stets für eine ausreichende Spreumenge innerhalb der Fallschachtabschnitte Sorge getragen ist. Es ist auch durchaus möglich, die untere Ausflußöffnung des untersten Fallschachtabschnittes verschließbar auszubilden, so daß ein Leerfördern des Eiersammeltroges 1 möglich ist, ohne die Spreu in den Fallschächten zu bewegen.

Unterhalb der Kanten der die vorderen Öffnungen der Nester begrenzenden Wände und innerhalb der gebildeten Nester, wie beispielsweise der Außenwand 15 oder 15a, sind Abweiserschilde 22 angeordnet, die ein Ausfließen der Spreu durch die Öffnungen verhindern sollen, wobei zusätzlich die Frontkanten im Bereich der Öffnungen nach innen so abgebogen sein können, daß dadurch Abweiserkanten 23 geschaffen werden.

Die Unterteilung der Nestetagen, in Längsrichtung der Nestetagen gesehen, kann durch an sich bekannte vollwandige oder gitterartige, in der Zeichnung aus Übersichtlichkeitsgründen nicht dargestellte Trennwände erfolgen.

Die Wirkungsweise der erfindungsgemäßen Käfiganordnung ist derart, daß durch Abziehen der mit Eier und Kot gemischten Spreu im Eiersammeltrog 1 ein langsames Nachfließen der Spreuschicht durch die Fallschachtabschnitte 16 und 16a erzielt wird. Gleichzeitig muß für eine ausreichende Zuführung zusätzlicher und neuer Spreu im oberen Vorratstrog 2 Sorge getragen werden.

Die mit Eier und Kot gemischte Spreu wird einer Sammelstelle zugeführt, in der nunmehr in bekannter Weise die Eier von der Spreu getrennt werden können, wobei die Spreu behandelt, z. B. desinfiziert werden kann und ergänzt wird. Gleichzeitig können durch entsprechende Gebläse oder Siebeinrichtungen die kotbehafteten Spreuteile entfernt und abgeführt werden.

Zusätzliche Fördermittel 21 können das Ausstoßen der Spreuschicht noch unterstützen, wobei in Abstimmung an die Umlaufgeschwindigkeit des Fördermittels 20 und des Fördermittels 21 sichergestellt werden kann, daß die Spreuschicht nur sehr langsam ausfließt, so daß die auf dieser Spreuschicht aufsitzenden Tiere das Abziehen der Spreuschicht überhaupt nicht bemerken und vor allen Dingen durch das Abziehen der Spreuschicht nicht gestört werden.

**Patentansprüche**

1. Nestanlage für Geflügelfarmen, bei der Käfigreihen in mehreren Etagen übereinander angeordnet sind, mit Fallschächten für Eier, Umlenkwänden in den Fallschächten für eine zur Verzögerung des freien Falls dienende Spreuschicht, die von oben nach unten von einem als Zuführvorrichtung dienenden Vorratstrog zu einem als Abzugsvorrichtung dienenden Eiersammeltrog geführt wird, dadurch gekennzeichnet, daß eine Umlenkwand (17) jeweils für den darüberliegenden Käfig einen die Spreuschicht (S) tragenden Boden und für den darunterliegenden Käfig eine Deckenfläche bildet und — in Seitenansicht der Käfiganordnung gesehen — einenendes an der einen Außenwand (15, 15a) der Käfiganordnung zur gegenüberliegenden Außenwand (15, 15a) weisend, nach unten geneigt befestigt ist und anderenendes innen im Abstand von der anderen gegenüberliegenden Außenwand (15, 15a) der Käfiganordnung mit einer sich im wesentlichen parallel zu dieser Außenwand (15, 15a) nach unten erstreckenden Abwinklung endet, um zwischen dieser Abwinklung der Umlenkwand (14, 17, 18) und der Innenseite dieser Außenwand (15, 15a) einen Fallschachtabschnitt (16, 16a) für die Spreu und die Eier zu bilden, unterhalb welchem mit Abstand die nächsttieferliegende Umlenkwand (17, 18) an der den Fallschachtabschnitt (16, 16a) begrenzenden Außenwand (15, 15a) in der gleichen Weise befestigt ist.

2. Nestanlage nach Anspruch 1, gekennzeichnet durch ein oberhalb der Fallschachtabschnitte (16, 16a) an der Vorderseite jedes Käfigs unterhalb dessen Zutrittsöffnung innen angeordnetes Abweiserschild (22) für die Spreu (S).

3. Nestanlage nach Anspruch 2, dadurch gekennzeichnet, daß die untere Randkante der Zutrittsöffnung jedes Käfigs eine Abweiserkante (23) bildend nach innen umgebogen ist.

## Claims

1. Nesting installation for poultry farms, in which rows of cages are arranged above one another in several tiers, with fall shafts for eggs, and deflecting walls in the fall shafts for a layer of chaff which serves for retarding the free fall and which is conveyed from the top downwards from a supply trough serving as a feed device to an egg-collecting trough serving as a drawing-off device, characterised in that each deflecting wall (17) forms for the cage located above it a base supporting the layer of chaff (S) and for the cage located beneath it a ceiling surface and, seen in the side view of the cage arrangement, at one end is fastened, inclined downwards, to one outer wall (15, 15a) of the cage arrangement and directed towards the opposite outer wall (15, 15a), and at the other end terminates on the inside at a distance from the other opposite outer wall (15, 15a) of the cage arrangement with a bent portion extending downwards essentially parallel to this outer wall (15, 15a), to form between this bent portion of the deflecting wall (14, 17, 18) and the inside of this outer wall (15, 15a) a fall-shaft portion (16, 16a) for the chaff and the eggs, underneath which, at a distance, the next lower deflecting wall (17, 18), is fastened in the same way to the outer wall (15, 15a) bounding the fall-shaft portion (16, 16a).

2. Nesting installation according to claim 1, characterised by a rejection plate (22) for the chaff (S) which is located on the inside above the fall-shaft portions (16, 16a) on the front side of each cage and underneath its access orifice.

3. Nesting installation according to claim 2, characterised in that the lower marginal edge of the access orifice of each cage is bent over inwards to form a rejection edge (23).

## Revendication

1. Installation de pondoirs pour fermes avicoles dans laquelle des rangées de cages sont disposées les unes au-dessus des autres sur plusieurs étages, comprenant des couloirs de chute pour les oeufs, des parois de déviation dans les couloirs de chute pour une couche de balles de grain destinée à ralentir la chute libre, laquelle couche est guidée de haut en bas à partir d'une auge d'approvisionnement servant de moyens d'amenée vers une auge de recueil d'oeufs servant de moyens de décharge, caractérisée en ce qu'une paroi de déviation (17) forme respectivement un plancher supportant la couche de balles (S) relativement à la cage disposée au-dessus et un plafond relativement à la cage disposée en dessous et — vue de côté à la structure en cage — est fixée à une extrémité de l'une des parois externes (15, 15a) de la structure en cage en présentant une inclinaison vers le bas et vers la paroi externe disposée en vis-à-vis (15, 15a) et se termine à l'autre extrémité interne distante de l'autre paroi externe disposée en vis-à-vis (15, 15a) de la structure en cage, par un coude dirigé vers le bas, essentiellement parallèle à ladite paroi externe (15, 15a), afin de former entre ledit coude de la paroi de déviation (14, 17, 18) et la face interne de ladite paroi externe (15, 15a) un tronçon de couloir de chute (16, 16a) pour les balles et les oeufs, sous lequel à une autre distance est fixée de la même manière la paroi de déviation juste en dessous (17, 18) à la paroi externe (15, 15a) délimitant le tronçon de couloir de chute (16, 16a).

2. Installation de pondoirs selon la revendication 1, caractérisée par un élément de protection et de repoussée (22) pour les balles (S) disposé à l'intérieur au-dessus du tronçon de couloir de chute (16, 16a), sur la face avant de chaque cage en dessous de son ouverture d'accès.

3. Installation de pondoirs selon la revendication 2, caractérisée en ce que le rebord inférieur de l'ouverture d'accès de chaque cage est plié vers l'intérieur pour former un bord de repoussée (23).